Europäisches Patentamt

European Patent Office

Office européen des brevets

(11) Veröffentlichungsnummer: **0 476 570 A2**

## EUROPÄISCHE PATENTANMELDUNG

(21) Anmeldenummer: **91115699.0**

(22) Anmeldetag: **16.09.91**

(51) Int. Cl.5: **H04B 7/10,** H01P 1/16

(30) Priorität: **18.09.90 DE 4029570**

(43) Veröffentlichungstag der Anmeldung:
**25.03.92 Patentblatt 92/13**

(84) Benannte Vertragsstaaten:
**AT CH DE IT LI**

(71) Anmelder: **RICHARD HIRSCHMANN GMBH & CO.**
**Richard-Hirschmann-Strasse 19 Postfach 110**
**W-7300 Esslingen a.N.(DE)**

(72) Erfinder: **Lange, Werner, Dr.**
**Föhrenweg 13**
**W-7300 Esslingen(DE)**

(74) Vertreter: **Geyer, Ulrich F., Dr. Dipl.-Phys. et al**
**WAGNER & GEYER Patentanwälte**
**Gewuerzmuehlstrasse 5 Postfach 246**
**W-8000 München 22(DE)**

(54) Richtfunkstrecken-Empfangsverfahren für Winkeldiversity-Betrieb.

(57) Das Richtfunk-Antennenverfahren für Winkeldiversity-Betrieb zeichnet sich durch eine unsymmetrische Mehrmodenerregung aus. Dadurch ergeben sich einfache Antenneneinrichtungen.

EP 0 476 570 A2

Die Erfindung betrifft ein Richtfunkstrecken-Empfangsverfahren für Winkeldiversity-Betrieb mit Mehrmodenerregung.

Richtfunkstrecken-Empfangsverfahren dieser Art sind beispielsweise aus der EP-A-352 976 sowie den Aufsätzen "Erregersysteme für Winkeldiversity-Antennen" von K.-P. Dombek et. al., Mitteilung aus dem Forschungsinstitut der Deutschen Bundespost, Darmstadt, dem Aufsatz "Winkeldiversityerreger nach dem Mehrmodenprinzip für den Einsatz in zweifach orthogonal polarisierten Parabolantennen", U. Leupelt und et.al., Firmenmitteilung der Siemens AG, München, Bereich Sicherungstechnik, sowie dem Aufsatz "Doppelreflektor-Muschelantenne für Winkeldiversity-Betrieb in zwei orthogonalen Polarisationen", G. Mörz, et. al., Firmeninformation der Firma ANT Nachrichtentechnik GmbH, Backnang, Produktbereich Richtfunk, bekannt. Diese Aufsätze sind in ITG- Fachbericht Nr. 111, Vorträge der ITG-Fachtagung "Antennen" 1990, Wiesbaden VDE-Verlag GmbH, Berlin veröffentlicht. Mit den in diesen Druckschriften beschriebenen Winkeldiversity-Verfahren werden Störungen auf Richtfunkstrecken mit Mehrwegeausbreitung dadurch ausgeschaltet oder zumindest verringert, daß die Blickrichtung der Empfangsantennen durch Verwendung von zwei winkelmäßig versetzten Erregersystemen in der Empfangsantenne verändert wird, indem zwischen den beiden Erregersystemen umgeschaltet wird. Auf diese Weise ist es möglich, einen auftretenden Umwegstrahl, der zur Auslöschung mit dem Hauptstrahl führt, winkelmäßig zu benachteiligen und dadurch seine auslöschende Wirkung zu verringern.

Sämtliche bekannten Verfahren und Vorrichtungen der genannten Art benötigen Hohlleiter-Verzweigungseinrichtungen zum Auskoppeln der Diversity-Signale aus dem Mehrmodenteil. Darüber hinaus ist eine Mehrmodeneingangssektion immer dann erforderlich, wenn die Winkeldifferenz bei parallelem Anbau von zwei Erregersystemen zu groß würde. Bei den bekannten Empfangsverfahren sind daher sehr aufwendige Anordnungen für die Mehrtyp-Wellenleiterverzweigung zum Auskoppeln von Summen- und Differenzmoden erforderlich.

Der Erfindung liegt die Aufgabe zugrunde, ein Richtfunkstrecken-Empfangsverfahren anzugeben, welches mit sehr einfachen Empfangseinrichtungen auskommt und bei denen Hohlleiter-Verzweigungsnetzwerke nicht erforderlich sind.

Ausgehend von dem eingangs genannten Richtfunkstrecken-Empfangsverfahren wird die gestellte Aufgabe dadurch gelöst, daß die Mehrmodenerregung unsymmetrisch erfolgt. Die erfindungsgemäße unsymmetrische Mehrmodenerregung ermöglicht die Verwendung gängiger Multimoden-Hörner, wie zum Beispiel der Potter-Hörner, die im Gegensatz zu den herkömmlichen Empfangseinrichtungen insbesondere auch deshalb wesentlich einfacher und kostengünstiger sind, weil Hohlleiterverzweigungseinrichtungen nicht benötigt werden. Durch die unsymmetrische Anregung eines gängigen Multimodenhornes wird auf einfache Weise und mit einfachsten Mitteln eine unsymmetrische Strahlausformung erreicht, die zu einer Strahlauslenkung der Hauptantenne in der Ebene der Unsymmetrie führt. Ebenso wie bei herkömmlichen Empfangsverfahren gilt auch hier, daß die erreichbare Winkelauslenkung um so größer wird, je kleiner die Antennenbrennweite ist.

Gemäß einer besonders vorteilhaften Ausgestaltung der Erfindung wird eine Sonde gedreht, wobei die Sonde vorzugsweise eine Hakensonde ist. Je nach Stellung dieser Sonde, zum Beispiel je nachdem, ob der Haken der Sonde vertikal nach oben oder nach unten zeigt, ergibt sich eine nach oben oder nach unten unsymmetrische Strahlausformung.

Vorzugsweise ist die Sonde mittels eines Motors, vorzugsweise eines Servomotors drehbar.

Gemäß einer weiteren, besonders vorteilhaften Ausführungsform der Erfindung erfolgt die unsymmetrische Mehrmodenerregung mittels wenigstens einer Sonde, die in den Erreger, beispielsweise in ein Mehrmodenhorn hineinragt. Besonders vorteilhaft ist es dabei, wenn die Sonden koaxial zueinander angeordnet sind. Vorzugsweise werden die Sonden, die beispielsweise an einem Umschaltnetzwerk angeschlossen sind, im Empfangsfalle wahlweise aktiviert und bewirken jeweils die Strahlschwenkung.

Eine besonders vorteilhafte Ausgestaltung der koaxialen Sonden besteht darin, daß sie als Einkoppelstifte vom Hohlleitermantel zueinander ausgerichtet diametral in den Hohlleiter hineinragen. Für den Sendefall ergibt sich dadurch eine mittige Strahllage, so daß die Antenne auf einfache Weise zwischen dem Empfang und dem Senden mit optimalen Voraussetzungen umgeschaltet werden kann. In diesem Zusammenhang ist es besonders vorteilhaft, wenn die Sonden im Sendefall zusammen über ein Summennetzwerk angesteuert werden, das die mittige Strahllage für den Sendefall optimiert.

Gemäß einer alternativen Ausgestaltung der Erfindung erfolgt die Anregung über wenigstens einen Längsschlitz im Mantel des Erregers. Auch in diesem Falle ergibt sich ein denkbar einfaches Empfangsverfahren mit einfachen antennentechnischen Mitteln, ohne das Erfordernis von Hohlleiterverzweigungen. Insbesondere im Hinblick auf den Sendefall sind die Längsschlitze bezüglich der Erregerachse vorzugsweise symmetrisch zueinander angeordnet, so daß auch in diesem Falle wieder wie bei den koaxial zueinander angeordneten Sonden eine optimale mittige Strahllage beim Senden erreicht wird. Hierbei ist es wiederum besonders vorteilhaft, daß die Längsschlitze im Sendefall zusammen über ein Summennetzwerk angesteuert werden.

Gemäß einer vorteilhaften Ausführungsform der Erfindung sowohl beim Verfahren mit Sonden als auch beim Verfahren mit Längsschlitzen wird beim Senden eine Einspeisung über einen hinter den Sonden bzw. Längsschlitzen angeordneten Hohlleiterübergang vorgenommen. Auf diese Weise ist sichergestellt, daß die Antenne stets in Hauptstrahlrichtung und damit optimal sendet.

Die Erfindung wird nachstehend anhand der Zeichnungen beispielsweise näher erläutert. Es zeigen:

Fig. 1    eine Ausführungsform des erfindungsgemäßen Verfahrens im Zusammenhang mit einem Mehrmodenhorn und verdrehbarer Sonde,

Fig. 2    eine weitere Ausführungsform des erfindungsgemäßen Verfahrens mit einem Mehrmodenhorn, bei dem in das Mehrmodenhorn vorstehende Sonden vorgesehen sind, und

Fig. 3    das erfindungsgemäße Verfahren am Beispiel eines Mehrmodenhorns mit Längsschlitzen in dessen Mantel.

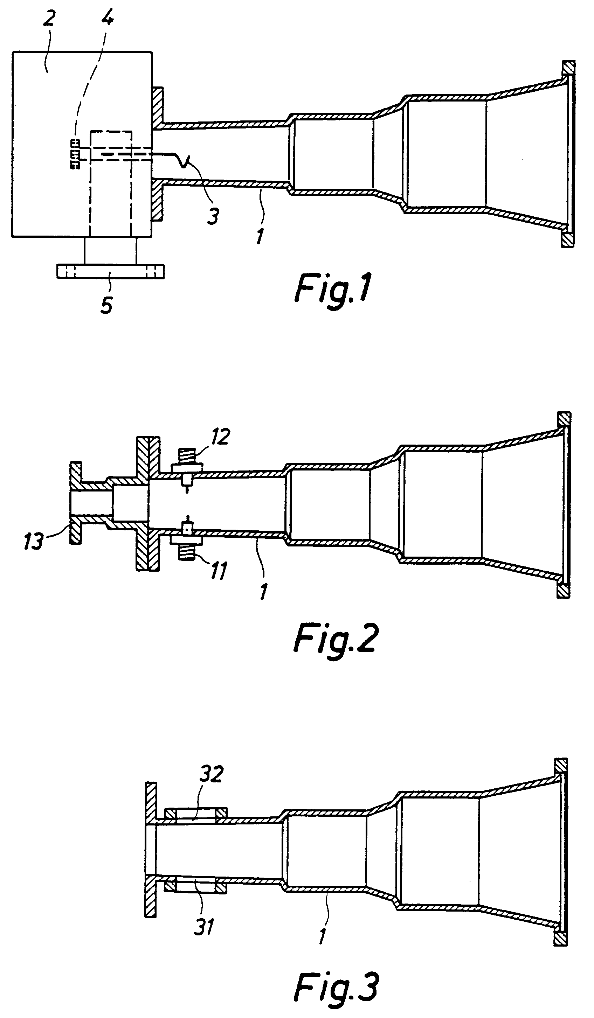

Fig. 1 zeigt in schematischer Darstellung ein Mehrmodenhorn 1, welches an einer Haltevorrichtung 2 befestigt ist. Von der Haltevorrichtung 2 ragt eine Sonde 3 in Form eines Hakens in das Mehrmodenhorn 1 hinein. Die Sonde 3 ist über einen schematisch dargestellten Servomotor 4 drehbar. Über einen Hohlleitereingang 5 wird das zu sendende Signal eingespeist.

Je nach dem Drehwinkel, mit dem der Servomotor die Sonde 3 dreht, ergeben sich für den Haken hinsichtlich der Hornachse unsymmetrische Ausrichtungen, so daß dadurch auch unsymmetrische Strahlausformungen erreicht werden. Beispielsweise ergeben sich die unsymmetrischen Strahlausformungen, wenn der Haken vertikal nach oben oder nach unten zeigt. Dadurch lassen sich zwei unterschiedliche Diagramme erzeugen und damit kann auf einfache Weise der Antennenbetrieb im Winkeldiversity-Verfahren durchgeführt werden.

Bei dem in Fig. 2 schematisch dargestellten Ausführungsbeispiel ragen zwei Einkoppelstifte 11, 12 von der Wandung des Mehrmodenhorns 1 in den Hohlleiter hinein. Die Einkoppelstifte stehen sich am Umfang des Hohlleiters diametral gegenüber und sind zueinander ausgerichtet. Bei diesem Ausführungsbeispiel ist ein Hohlleitereingang 13 symmetrisch zur Achse des Mehrmodenhorns 1, zum Beispiel eines Potterhorns, in Abstrahlrichtung vor den Einkoppelstiften 11, 12 angebracht.

Obgleich dies in Fig. 2 nicht dargestellt ist, sind die Einkoppelstifte 11 und 12 mit einem Umschaltnetzwerk verbunden, das im Empfangsfall wahlweise einen der Einkoppelstifte 11 bzw. 12 aktiviert. Da sich diese Sonden am Umfang des Hohlleitermantels gegenüberstehen, bewirken sie je nach Aktivierung die Strahlschwenkung. Dadurch ist es auch mit einfachsten Mitteln möglich, das Winkeldiversity-Verfahren auch bei herkömmlichen Mehrmodenhörnern ohne zusätzliche Hohlleiterverzweigungseinrichtungen einzusetzen. Die Einkoppelstifte 11 und 12 sind vorteilhafterweise weiterhin mit einem Summennetzwerk verbunden und werden über dieses angesteuert. Da die Einkoppelstifte 11 und 12 diametral gegenüberliegen und zueinander ausgerichtet sind, ergibt sich für den Sendefall eine mittige Strahllage. Da bei dem dargestellten Ausführungsbeispiel im Sendefall über den axialsymmetrisch angeordneten Hohlleitereingang 13 eingespeist wird, wird die Hauptstrahlrichtung, in der die Antenne senden soll, nicht beeinträchtigt, so daß sich optimale Sendebedingungen ergeben.

In Fig. 3 ist eine weitere Ausführungsform zur Durchführung des erfindungsgemäßen Verfahrens schematisch dargestellt. Die Anregung erfolgt hierbei durch Längsschlitze 31 und 32 im Mantel des Mehrmodenhorns 1. Im Hinblick auf die Verwendung von Umschaltnetzwerken und Summennetzwerken sowie die Verwendung der Hohlleitereingänge gilt auch für diese Ausführungsform zusätzlich das an Hand von Fig. 2 Ausgeführte.

**Patentansprüche**

1.   Richtfunkstrecken-Antennenverfahren für Winkeldiversity-Betrieb mit Mehrmodenerregung,
     dadurch **gekennzeichnet,**
     daß die Mehrmodenerregung unsymmetrisch erfolgt.

2.   Verfahren nach Anspruch 1, dadurch gekennzeichnet, daß eine Sonde im Erreger gedreht wird.

3.   Verfahren nach Anspruch 2, dadurch gekennzeichnet, daß die Sonde eine Hakensonde ist.

4.   Verfahren nach Anspruch 2 oder 3, dadurch gekennzeichnet, daß die Sonde von einem Motor gedreht wird.

5.   Verfahren nach Anspruch 1, dadurch gekennzeichnet, daß die unsymmetrische Mehrmodenerregung mittels wenigstens einer Sonde erfolgt, die in den Erreger hineinragt.

6.   Verfahren nach Anspruch 1 oder 5, dadurch gekennzeichnet, daß wenigstens zwei Sonden koaxial zueinander angeordnet sind.

7.    Verfahren nach Anspruch 1, 5 oder 6, dadurch gekennzeichnet, daß die Sonden im Empfangsfall wahlweise aktiviert werden.

8.    Verfahren nach einem der Ansprüche 1 und 5 bis 7, dadurch gekennzeichnet, daß die Sonden vom Hohlleitermantel zueinander ausgerichtet diametral in den Hohlleiter hineinragen.

9.    Verfahren nach einem der Ansprüche 1 und 5 bis 8, dadurch gekennzeichnet, daß die Sonden im Sendefall zusammen über ein Summennetzwerk angesteuert werden.

10.    Verfahren nach einem der Ansprüche 1 und 5 bis 9, dadurch gekennzeichnet, daß die Anregung über wenigstens einen Längsschlitz im Mantel des Erregers erfolgt.

11.    Verfahren nach Anspruch 10, dadurch gekennzeichnet, daß wenigstens zwei Längsschlitze bezüglich der Erregerachse symmetrisch zueinander angeordnet sind.

12.    Verfahren nach einem der Ansprüche 1, 10 oder 11, dadurch gekennzeichnet, daß die Längsschlitze im Sendefall zusammen über ein Summennetzwerk angesteuert werden.

13.    Verfahren nach einem der Ansprüche 1 und 5 bis 12, dadurch gekennzeichnet, daß beim Senden eine Einspeisung über einen hinter den Sonden bzw. Längsschlitzen angeordneten Hohlleiterübergang erfolgt.

*Fig.1*

*Fig.2*

*Fig.3*